## Europäisches Patentamt
## European Patent Office
## Office européen des brevets

(19)

(11) Veröffentlichungsnummer: **0 113 407**
**B1**

(12) **EUROPÄISCHE PATENTSCHRIFT**

(45) Veröffentlichungstag der Patentschrift:
**27.01.88**

(51) Int. Cl.⁴: **F 16 F 15/32, B 65 H 57/14**

(21) Anmeldenummer: **83111273.5**

(22) Anmeldetag: **11.11.83**

(54) Schnellaufende Walze.

(30) Priorität: **07.01.83 CH 77/83**

(43) Veröffentlichungstag der Anmeldung:
**18.07.84 Patentblatt 84/29**

(45) Bekanntmachung des Hinweises auf die Patenterteilung:
**27.01.88 Patentblatt 88/4**

(84) Benannte Vertragsstaaten:
**CH DE FR GB IT LI**

(56) Entgegenhaltungen:
FR - A - 2 197 457
FR - A - 2 461 855
GB - A - 631 520
GB - A - 805 371
US - A - 2 336 697
US - A - 2 955 876

ELEKTRIE, Band 14, Nr. 5, Mai 1960, Seiten 39,40 F.
HINTZE: "Auswuchten von Läufern elektrischer
Maschinen" Seite 40, Zeile 7 - Ende

(73) Patentinhaber: **MASCHINENFABRIK RIETER AG,
Postfach 290, CH-8406 Winterthur (CH)**

(72) Erfinder: **von Burg, Paul, Johannisstrasse 31,
CH-8404 Winterthur (CH)**
Erfinder: **Daughtry, Mervil Edward, Route 4 Box 62 I,
Lugoff S.C. 29708 (US)**
Erfinder: **Rogers, Sherman A., Route 1 Box 223 FA,
Lugoff S.C. 29708 (US)**

(74) Vertreter: **Manitz, Gerhart, Dipl.-Phys. Dr. et al, MANITZ,
FINSTERWALD & ROTERMUND Robert-Koch-Strasse 1,
D-8000 München 22 (DE)**

## Beschreibung

Die Erfindung betrifft eine heizbare Galette zur Aufnahme von Filamentfäden mit einer einseitig gelagerten Welle, an deren von der Lagerstelle abgewandtem Ende eine Stirnwand befestigt ist, an welcher mit radialem Abstand von der Welle eine sich parallel zur Welle in Richtung von deren Lagerstelle erstreckende Hohlwalze zur Aufnahme der Filamentfäden angebracht ist, wobei sich in den hohlzylindrischen Ringraum zwischen der Welle und der Hohlwalze von der Seite der Lagerstelle der Welle her eine stationäre Heizvorrichtung hineinerstreckt.

Es ist bereits eine heizbare Galette dieser Art bekannt (CH-A-557 016), bei der die Welle einer Hohlwalze am Maschinengestell fliegend gelagert ist, während die Hohlwalze ihrerseits in entgegengesetzter Richtung an dem freien Ende der Welle fliegend gelagert ist. Eine derartige, Probleme bei der Auswuchtung hervorrufende Lagerung ist erforderlich, weil die stationäre Heizvorrichtung in den Ringraum zwischen der Welle und der Hohlwalze axial eingreifen muss. Die Auswuchtung einer derartig doppelfliegend gelagerten heizbaren Galette ist deswegen besonders schwierig, weil das Galettenlager bereits erhebliche Gewichts- und Schwingungsmomente aufnehmen muss, so dass durch zusätzliche Massnahmen zur Auswuchtung das Gesamtgewicht der Galette nicht zu stark erhöht werden darf. Aus diesem Grunde hat man sich bisher damit begnügt, die Galette mehrfach von der Antriebswelle abzunehmen und an geeigneter Stelle Material so lange zu entfernen, bis eine einigermassen Auswuchtung herbeigeführt war. Dieses Verfahren zur Durchführung der erforderlichen Auswuchtung ist jedoch arbeitsaufwendig und führt auch nicht immer zu einer völligen Beseitigung jeder Unwucht.

Es ist auch schon bekannt (US-A-2 955 876), Ausgleichsgewichte im auszuwuchtenden Rotor selbst vorzusehen, was jedoch zur Folge hat, dass durch die hierfür erforderlichen Bohrungen der Rotor geschwächt wird. Eine derartige Massnahme kann insbesondere bei hohen Drehzahlen des Rotors zu Schwierigkeiten führen. Weiter ist es bereits bekannt (US-A-2 336 697), einen auszuwuchtenden Propeller und einen Auswuchtring gemeinsam auf eine Welle aufzusetzen und zu vernieten. Die in dem Auswuchtring erzeugten Auswuchtkräfte müssen daher zunächst auf die Welle und von dieser auf den Propeller oder umgekehrt übertragen werden. Die Anordnung eines besonderen Auswuchtringes auf der Welle bedingt den weiteren Nachteil, dass die Auswuchtgewichte auf einem vergleichsweise kleinen Radius angeordnet sind, so dass erhebliche Massen angebracht werden müssen, um einen Auswuchteffekt zu erzielen.

Demgegenüber liegt der vorliegenden Erfindung die Aufgabe zugrunde, eine heizbare Galette der eingangs genannten Gattung zu schaffen, die ohne Schwächung der Hohlwalze und ohne auf der Welle angeordnete Auswuchtringe eine problemlose Auswuchtung der Hohlwalze im fertig montierten Zustand gestattet. Insbesondere soll das Gesamtgewicht der Galette durch die vorgesehenen Ausrichtmassnahmen nicht übermässig erhöht werden.

Zur Lösung dieser Aufgabe sieht die Erfindung vor, dass in einer auf der von der Lagerstelle der Welle abgewandten Seite der Stirnwand vorgesehenen Zentriervertiefung ein axial im wesentlichen mit der Hohlwalze ausgerichteter Auswuchtring mit über den Umfang verteilten, von der von der Lagerstelle abgewandten Seite her zugänglichen Bohrungen zur Aufnahme von Auswuchtgewichten befestigt ist.

Aufgrund dieser Ausbildung kommt man mit einem sehr schmalen und daher nicht allzu schweren Auswuchtring aus, denn die Auswuchtgewichte sind praktisch auf dem Umfang der auszuwuchtenden Hohlwalze angeordnet, so dass eine wirkungsvolle Auswuchtung schon mit wenigen und nicht besonders schweren Auswuchtgewichten erreicht werden kann. Der Auswuchtring erstreckt sich radial praktisch nur in den Bereichen, wo Auswuchtgewichte vorzusehen sind, während insbesondere im zentralen Bereich, der mit der Welle und dem diesen umgebenden Ringraum ausgerichtet ist, praktisch kein Material des Auswuchtringes vorhanden ist. Mit minimalem Gewicht wird also ein hoher Auswuchtwirkungsgrad erzielt.

Ein weiterer Vorteil besteht darin, dass der unmittelbar an der Stirnwand der Hohlwalze zentrierte Auswuchtring sich unmittelbar an dem auszuwuchtenden Gegenstand, nämlich der Hohlwalze axial und radial abstützt, so dass die Auswuchtkräfte unmittelbar vom Auswuchtring auf die Hohlwalze übertragen werden. Weiter ist es vorteilhaft, dass sich der Auswuchtring in entgegengesetzter Richtung wie die Hohlwalze von der Stirnwand derselben wegerstreckt, so dass er bezüglich der fliegend am Ende der Welle gelagerten Hohlwalze ein Gegengewicht bildet, welches sich auch auf die Schwingungen der Hohlwalze relativ zur Welle dämpfend auswirkt.

Ein besonderer Vorteil der Erfindung besteht auch darin, dass das Material der Hohlwalze, der Stirnwand und der Welle selbst nicht durch Auswuchtmassnahmen geschwächt wird.

Es ist zwar nach einer vorteilhaften Weiterbildung der Erfindung vorgesehen, dass an dem ersten Auswuchtring radial innen Befestigungsvorsprünge mit Befestigungsbohrungen zur Hindurchführung von Befestigungsschrauben vorgesehen sind, doch sitzen diese Befestigungsschrauben fest in entsprechenden Gewindebohrungen in der Stirnwand der Hohlwalze, so dass an dieser Stelle eine Schwächung nicht zu befürchten ist, wie sie beim Vorsehen von leergelassenen Auswuchtbohrungen vorhanden wäre.

Für eine möglichst umfassende Gewichtseinsparung ist es weiter zweckmässig, wenn der erste Auswuchtring radial ausserhalb der Bohrungen in Richtung zur Stirnwand abgeschrägt ist.

Eine weitere Ausführungsform kennzeichnet sich dadurch, dass die von der Stirnwand abgewandte Stirnseite des ersten Auswuchtringes durch eine sich auch über die Bohrungen und die Zentralöffnung des Auswuchtringes erstreckende Deckelscheibe abgedeckt ist. Die Deckelscheibe hat dabei lediglich die Funktion, die axiale Stirnseite der Anordnung vor Verschmutzung zu schützen, eine leichte Reinigung zu ermöglichen und ein angenehmes Aussehen zu erreichen. Die Deckelscheibe kann somit aus äusserst leichtem Material gefertigt werden, welches das Gesamtgewicht der Anordnung kaum erhöht.

Eine weitere Verbesserung der Auswuchtung kann erfindungsgemäss dadurch erzielt werden, dass an dem von der Stirnwand abgewandten Endbereich der Hohlwalze auf deren Aussenumfang ein zweiter Auswuchtring mit über den Umfang verteilten, von der von der Lagerstelle abgewandten Seite her zugänglichen Bohrungen zur Aufnahme von Auswuchtgewichten befestigt ist.

Auf diese Weise kann auch das freie Ende der fliegend gelagerten Hohlwalze vollständig gewichtsausgeglichen werden, wobei man ebenfalls mit einem Minimum an zusätzlichem Gewicht auskommt, weil der zweite Auswuchtring sich sogar noch auf einem grösseren Radius als der erste Auswuchtring befindet. Für den zweiten Auswuchtring wird somit noch weniger Material benötigt.

Eine Weiterbildung dieser weiteren Ausführungsform der Erfindung kennzeichnet sich dadurch, dass die von der Lagerstelle abgewandte Stirnseite des zweiten Auswuchtringes durch einen sich über die Bohrungen des zweiten Auswuchtringes erstreckenden Deckelring abgedeckt ist. Auch dieser Deckelring kann sehr leicht ausgebildet werden, weil er lediglich eine reine Abdeckfunktion hat.

Zweckmässigerweise sind die Auswuchtringe abnehmbar, so dass sie nachträglich montiert und bei Bedarf auch ausgewechselt werden können.

Um eine einwandfreie Auswuchtung zu erzielen, ist es vorteilhaft, wenn in den Auswuchtringen mindestens drei Bohrungen vorgesehen sind, welche eine Teilung von 120 Winkelgraden aufweisen. In jedem Fall sollte die Zahl der Bohrungen durch die Zahl 3 teilbar sein, um die Durchführung eines besonders einfachen Auswuchtverfahrens zu ermöglichen.

Es ist weiter vorteilhaft, wenn die Bohrungen in den Auswuchtringen im wesentlichen in einer Richtung parallel zur Achse der Welle gerichtet sind.

Eine besonders einfache Montage der Auswuchtgewichte wird erzielt, wenn die Bohrungen in den Auswuchtringen Gewindebohrungen zur Aufnahme von Gewindeschrauben sind.

Die Erfindung wird im folgenden beispielsweise anhand der Zeichnung beschrieben; in dieser zeigt:

Fig. 1 einen schematischen Axialschnitt einer ersten Ausführungsform einer heizbaren Galette,

Fig. 2 eine Stirnansicht des Gegenstandes der Fig. 1 bei abgenommener Deckelscheibe,

Fig. 3 einen vergrösserten Ausschnitt aus Fig. 1, welcher die wesentlichen Bestandteile des ersten Auswuchtringes vergrössert wiedergibt,

Fig. 4 eine Stirnansicht des zweiten Auswuchtringes der heizbaren Galette nach Fig. 1,

Fig. 5 einen vergrösserten Ausschnitt aus Fig. 1, welcher die wesentlichen Einzelheiten des zweiten Auswuchtringes zeigt, und

Fig. 6 eine Teil-Stirnansicht eines Auswuchtringes mit einer besonders engen Anordnung der die Auswuchtgewichte aufnehmenden Bohrungen.

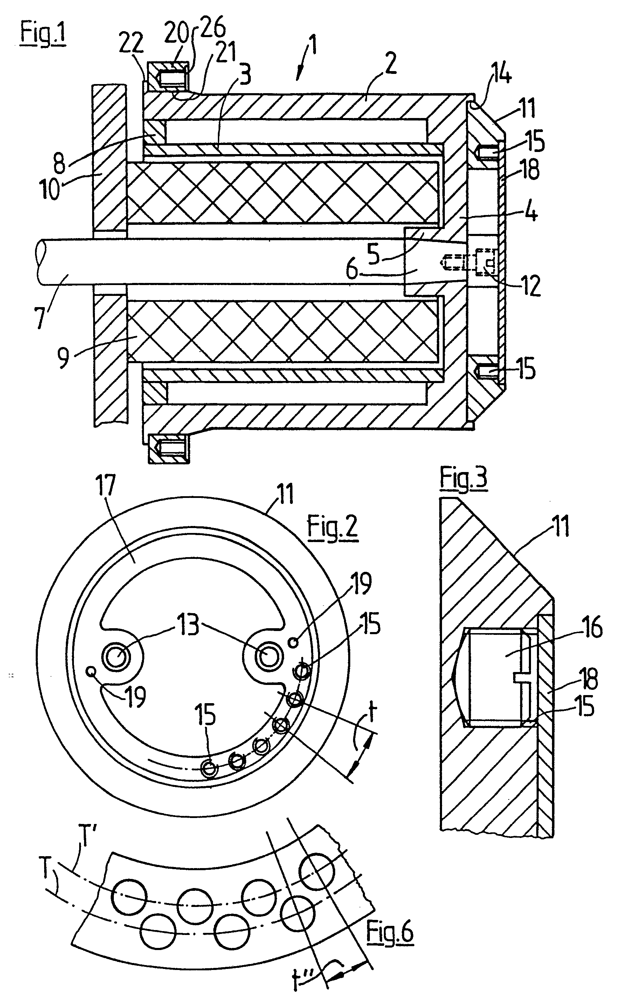

Als Beispiel einer Walze zeigt Fig. 1 eine Galette 1 mit einer Hohlwalze bestehend aus einer zylindrischen äusseren Mantelwand 2 und einer links durch ein ringförmiges Anschlussteil 8 auf radialem Abstand gehaltenen inneren zylindrischen Mantelwand 3. Die Mantelwände 2 und 3 sind an der rechten Stirnseite durch eine gemeinsame scheibenförmige Stirnwand 4 miteinander verbunden, welche im zentralen Teil als Nabe 5 zur Befestigung der Hohlwalze auf dem konischen Endteil 6 einer sich durch eine Öffnung im Maschinengestell 10 zu einem nicht dargestellten Lager erstreckenden Welle 7 ausgebildet ist. Das ringförmige Anschlussteil 8 befindet sich zwischen den der Stirnwand 4 gegenüberliegenden Stirnenden der Mantelwände 2, 3. Eine stationäre Heizvorrichtung 9 ist an einem Maschinengestell 10 befestigt und ragt axial in den zylindrischen Ringraum zwischen der inneren Mantelwand 3 und der Welle 7 hinein. Die Stirnwand 4 ist mittels einer im konischen Endteil 6 eingelassenen Schraube (nicht gezeigt) befestigt.

Anliegend an die Stirnwand 4 ist ein erster Auswuchtring 11 (Fig. 2) mittels zweier Schrauben 12 (in Fig. 1 mit gestrichelten Linien gezeigt), welche in Schraubenlöcher 13 geführt sind, an der Stirnwand 4 befestigt. Eine zylindrische Zentriervertiefung 14 an der Stirnwand 4 dient der Zentrierung des ersten Auswuchtringes 11.

Der erste Auswuchtring 11 ist mit Gewindebohrungen 15 zur Aufnahme von Auswuchtsgewichten 16 (Fig. 3) versehen. Die Anzahl der Gewindebohrungen ist, um eine einfache Auswuchtung durchführen zu können, durch drei teilbar und die Teilung t von Gewindebohrung zu Gewindebohrung am Teilkreis 17 gleichmässig. Zur Abdeckung der Gewindebohrungen 15 ist u.a. eine Deckelscheibe 18 mittels zweier Schrauben (nicht gezeigt) am ersten Auswuchtring 11 befestigt. Zur Aufnahme dieser Schrauben ist der erste Auswuchtring 11 mit u.a. zwei Gewindebohrungen 19 versehen.

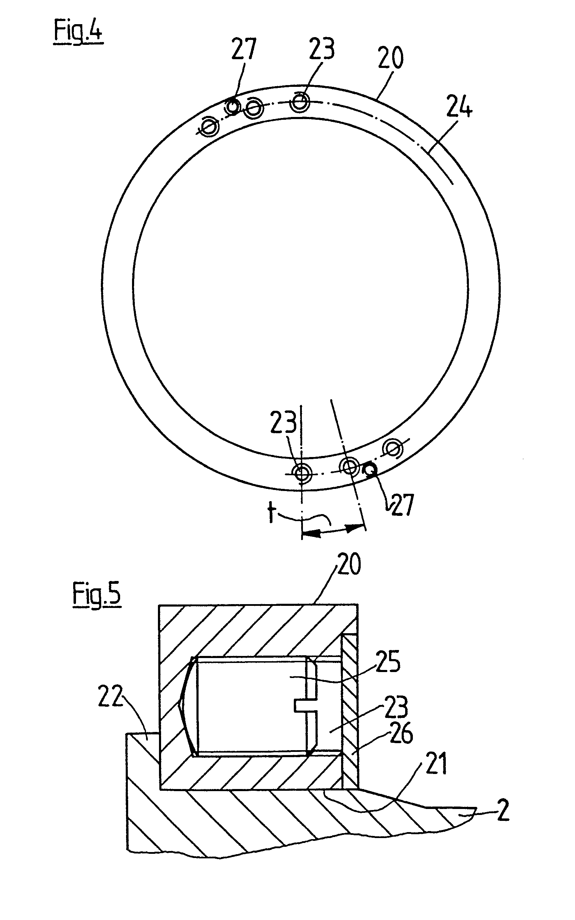

Ein zweiter Auswuchtring 20 (Fig. 1, 4 und 5) ist an dem dem Maschinengestell 10 zugewendeten Ende der äusseren Mantelwand 2 vorgesehen. Der zweite Auswuchtring liegt mit einer Presspassung auf einer zylindrischen Fläche 21 des äusseren Mantels 2 und ist in der gegen das Maschinengestell 10 gerichteten axialen Richtung durch einen Steg 22 gesichert. Zur Sicherung gegen Drehung weist der Auswuchtring 20 eine gegen das Maschinengestell 10 gerichtete Nase (nicht gezeigt) auf, die in eine im Steg 22 vorgesehene Ausnehmung (nicht gezeigt) passt. Wie aus Fig. 1 und 4 ersichtlich, weist der zweite Auswuchtring 20 eine vorgegebene, durch drei teilbare Anzahl Gewindebohrungen 23 auf. Aus denselben Gründen ist die Teilung t der auf einem Teilkreis 24 angeordneten Gewindebohrungen 23 gleichmässig. Die Gewindebohrungen 23 dienen zur Aufnahme von mit einem Gewinde versehenen Auswuchtgewichten 25. Zur Abdeckung der Gewindebohrungen 23 ist ein Deckelring 26 im zweiten Auswuchtring eingelassen und mittels zweier Schrauben (nicht gezeigt) an diesem befestigt. Zur Aufnahme der vorgenannten Schrauben sind im zweiten Auswuchtring die Schraubenlöcher 27 vorgesehen. Durch die Presspassung des zweiten Auswuchtringes 20 auf der zylindrischen Fläche 21 ist der zweite Auswuchtring 20 auf dem äusseren Mantel 2 zentrisch geführt.

In Fig. 6 ist eine Variante der Anordnung der Gewindebohrungen 15 bzw. 23 gezeigt, indem, um eine feinere Teilung t″ zu erhalten, die Gewindebohrungen auf zwei Teilkreisen T bzw. T′ angeordnet sind.

Die durch drei teilbare Anzahl Gewindebohrungen dient einem Auswuchtverfahren, welches lediglich ein Vibrationsmessgerät benötigt und bei dem die Unwucht annäherungsweise auf graphischem Weg ermittelt wird.

**Patentansprüche**

1. Heizbare Galette (1) zur Aufnahme von Filamentfäden mit einer einseitig gelagerten Welle (7), an deren von der Lagerstelle abgewandtem Ende eine Stirnwand (4) befestigt ist, an welcher mit radialem Abstand von der Welle (7) eine sich parallel zur Welle (7) in Richtung von deren Lagerstelle erstreckende Hohlwalze (2, 3, 8) zur Aufnahme der Filamentfäden angebracht ist, wobei sich in den hohlzylindrischen Ringraum zwischen der Welle (7) und der Hohlwalze (2, 3, 8) von der Seite der Lagerstelle der Welle (7) her eine stationäre Heizvorrichtung (9) hineinerstreckt, dadurch gekennzeichnet, dass in einer auf der von der Lagerstelle der Welle (7) abgewandten Seite der Stirnwand (4) vorgesehenen Zentriervertiefung (14) ein axial im wesentlichen mit der Hohlwalze (2, 3, 8) ausgerichteter Auswuchtring (11) mit über den Umfang verteilten, von der von der Lagerstelle abgewandten Seite her zugänglichen Bohrungen (15) zur Aufnahme von Auswuchtgewichten (16) befestigt ist.

2. Galette nach Anspruch 1, dadurch gekennzeichnet, dass an dem ersten Auswuchtring (11) radial innen Befestigungsvorsprünge mit Befestigungsbohrungen (13) zur Hindurchführung von Befestigungsschrauben (12) vorgesehen sind.

3. Galette nach Anspruch 1 oder 2, dadurch gekennzeichnet, dass der Auswuchtring (11) radial ausserhalb der Bohrungen (15) in Richtung zur Stirnwand (4) abgeschrägt ist.

4. Galette nach einem der vorhergehenden Ansprüche, dadurch gekennzeichnet, dass die von der Stirnwand (4) abgewandte Stirnseite des ersten Auswuchtringes (11) durch eine sich auch über die Bohrungen (15) und die Zentralöffnung des Auswuchtringes (11) erstreckende Deckelscheibe (18) abgedeckt ist.

5. Galette nach einem der vorhergehenden Ansprüche, dadurch gekennzeichnet, dass an dem von der Stirnwand (4) abgewandten Endbereich der Hohlwalze (2, 3, 8) auf deren Aussenumfang ein zweiter Auswuchtring (20) mit über den Umfang verteilten, von der von der Lagerstelle abgewandten Seite her zugänglichen Bohrungen (23) zur Aufnahme von Auswuchtgewichten (25) befestigt ist.

6. Galette nach Anspruch 5, dadurch gekennzeichnet, dass die von der Lagerstelle abgewandte Stirnseite des zweiten Auswuchtringes (20) durch einen sich über die Bohrungen (23) des zweiten Auswuchtringes (20) erstreckenden Deckelring (26) abgedeckt ist.

7. Galette nach einem der vorhergehenden Ansprüche, dadurch gekennzeichnet, dass die Auswuchtringe (11; 20) abnehmbar sind.

8. Galette nach einem der vorhergehenden Ansprüche, dadurch gekennzeichnet, dass in den Auswuchtringen (11, 20) mindestens drei Bohrungen (15, 23) vorgesehen sind, welche eine Teilung (t) von 120 Winkelgraden aufweisen.

9. Galette nach Anspruch 8, dadurch gekennzeichnet, dass die Anzahl der Bohrungen (15, 23) in den Auswuchtringen (11, 20) durch die Zahl drei teilbar ist.

10. Galette nach einem der vorhergehenden Ansprüche, dadurch gekennzeichnet, dass die Bohrungen (15, 23) in den Auswuchtringen (11, 20) im wesentlichen in einer Richtung parallel zur Achse der Welle (7) gerichtet sind.

11. Galette nach einem der vorhergehenden Ansprüche, dadurch gekennzeichnet, dass die Bohrungen (15, 23) in den Auswuchtringen (11, 20) Gewindebohrungen zur Aufnahme von Gewindeschrauben (16, 25) sind.

**Claims**

1. Heatable galette (1) for receiving filament threads with a shaft (7) supported on one side, an end wall (4) being secured to the end of the shaft remote from the support position and a hollow roller (2, 3, 8) to receive the filament threads being mounted on the end wall with a radial spacing from the shaft (7) and extending parallel to the shaft (7) in a direction from the support position thereof, a stationary heater device (9) projecting into the cylindrical annular space between the shaft (7) and the hollow roller (2, 3, 8) from the side on which the shaft (7) is supported, characterised in that a centering recess (14) is provided in the face of the end wall (4) directed away from the support position of the shaft (7), a balance ring (11) substantially axially aligned with the hollow roller (2, 3, 8) is mounted in the recess (14) and is provided with bores (15) to receive balance weights (16), the bores (15) being distributed around the circumference of the ring (11) and being accessible from the side directed away from the support position.

2. Galette according to claim 1, characterised in that radially inner mounting projections with mounting bores (13), through which fixing screws (12) can extend, are provided on the first balance ring (11).

3. Galette according to claim 1 or 2, characterised in that radially outwardly from the bores (15) the balance ring (11) is inclined in a direction towards the end wall (4).

4. Galette according to one of the preceding claims, characterised in that the end face of the first balance ring (11) directed away from the end wall (4) is covered by a covering disc (18) extending over the bores (15) and the central opening of the balance ring (11).

5. Galette according to one of the preceding claims, characterised in that a second balance ring (20) is secured on the outer periphery of the hollow roller (2, 3, 8) in an end region thereof remote from the end wall (4), and is provided with bores (23) to receive balance weights (25), the bores being distributed over the circumference of the ring and being accessible from the side directed away from the support position.

6. Galette according to claim 5, characterised in that the end face of the second balance ring (20) directed away from the support position is covered by a covering ring (26) extending over the bores (23) of the second balance ring (20).

7. Galette according to one of the preceding claims, characterised in that the balance rings (11, 20) are removable.

8. Galette according to one of the preceding claims, characterised in that at least three bores (15, 23), having an angular spacing (t) of 120 degrees, are provided in the balance rings (11, 20).

9. Galette according to claim 8, characterised in that the number of bores (15, 23) in the balance rings (11, 20) is divisible by the number three.

10. Galette according to one of the preceding claims, characterised in that the bores (15, 23) in the balance rings (11, 20) extend substantially in a direction parallel to the axis of the shaft (7).

11. Galette according to one of the preceding claims, characterised in that the bores (15, 23) in the balance rings (11, 20) are screw-threaded bores to receive threaded screws (16, 25).

**Revendications**

1. Galet chauffant (1) pour réceptionner des fils de filaments, avec un arbre (7) fixé dans un palier d'un seul côté, et une paroi frontale (4) fixée sur l'extrémité de l'arbre qui est opposée au palier, paroi sur laquelle est fixé un rouleau creux (2, 3, 8) ayant une distance radiale par rapport à l'arbre (7), et s'étendant d'une manière parallèle à l'arbre (7) en direction de son palier, pour recevoir les fils de filaments, et où un dispositif de chauffage stationnaire (9) s'étend à l'intérieur de l'espace vide cylindrique compris entre l'arbre (7) et le rouleau creux (2, 3, 8), depuis le côté où se trouve le palier de l'arbre (7), caractérisé par le fait que, dans une excavation de centrage (14) prévue sur une face de la paroi frontale (14) éloignée du palier de l'arbre (7), un anneau d'équilibrage (11) est monté en alignement axial principalement avec le rouleau creux (2, 3, 8), anneau qui possède des trous accessibles (15) pour la réception de contre-poids d'équilibrage (16), qui sont répartis sur la circonférence de la face éloignée du palier.

2. Galet selon revendication 1, caractérisé par le fait que, sur le premier anneau d'équilibrage (11), des avancées de fixation sont prévues radialement vers l'intérieur, avec des trous de fixation (13), pour introduire des vis de fixation (12).

3. Galet selon revendication 1 ou 2, caractérisé par le fait que l'anneau d'équilibrage (11) est biseauté radialement, en dehors des trous (15), et en direction de la paroi frontale (4).

4. Galet selon une des revendications citées précédemment, caractérisé par le fait que la face frontale du premier anneau d'équilibrage (11), s'éloignant de la paroi frontale (4), est recouverte par un couvercle en forme de disque (18), qui s'étend au-dessus des trous (15) et au-dessus de l'ouverture centrale de l'anneau d'équilibrage (11).

5. Galet selon une des revendications citées précédemment, caractérisé par le fait qu'un deuxième anneau d'équilibrage (20) est monté dans la zone finale du rouleau creux (2, 3, 8), sur sa périphérie extérieure éloignée de la paroi frontale (4), anneau qui possède des trous accessibles (23) pour la réception de contre-poids d'équilibrage (25) qui sont répartis sur la circonférence de la face éloignée du palier.

6. Galet selon revendication 5, caractérisé par le fait que la face frontale du deuxième anneau d'équilibrage (20), s'éloignant du palier, est recouverte par un couvercle en forme d'anneau (26), qui s'étend au-dessus des trous (23) du deuxième anneau d'équilibrage (20).

7. Galet selon une des revendications citées précédemment, caractérisé par le fait que les anneaux d'équilibrage (11; 20) peuvent être enlevés.

8. Galet selon une des revendications citées précédemment, caractérisé par le fait qu'au moins trois trous (15, 23) sont prévus dans les anneaux d'équilibrage (11, 20), et qu'ils présentent un angle de division (t) de 120°.

9. Galet selon revendication 8, caractérisé par le fait que le nombre de trous (15, 23) des anneaux d'équilibrage (11, 20) est divisible par le chiffre trois.

10. Galet selon une des revendications citées précédemment, caractérisé par le fait que les trous (15, 23) des anneaux d'équilibrage (11, 20) sont dirigés dans une direction principalement parallèle à l'axe de l'arbre (7).

11. Galet selon une des revendications citées précédemment, caractérisé par le fait que les trous (15, 23) des anneaux d'équilibrage (11, 20) sont des trous taraudés pour recevoir des vis filetées (16, 25).

Fig.1

Fig.2

Fig.3

Fig.6

Fig.4

Fig.5